# EUROPÄISCHE PATENTSCHRIFT

(11) **EP 3 081 904 B1**
(45) Veröffentlichungstag und Bekanntmachung des Hinweises auf die Patenterteilung: **08.01.2020**
(21) Anmeldenummer: 15194310.7
(22) Anmeldetag: 12.11.2015
(51) Int. Cl.: G01C 21/36

(54) **VERFAHREN UND VORRICHTUNG ZUR NAVIGATION AN EINEN ZIELORT**
METHOD AND DEVICE FOR NAVIGATING TO A DESTINATION
PROCEDE ET DISPOSITIF DE NAVIGATION VERS UN EMPLACEMENT CIBLE

(30) Priorität: 17.04.2015 DE 102015206979
(43) Veröffentlichungstag der Anmeldung: 19.10.2016
(73) Patentinhaber: Volkswagen Aktiengesellschaft, 38440 Wolfsburg (DE)
(72) Erfinder: SCHRIEVER, David, 38176 Wendebrug (DE)

(56) Entgegenhaltungen:
- EP-A1- 1 422 501
- EP-A1- 2 772 726
- EP-A2- 1 024 467
- WO-A1-2010/105934
- WO-A2-2014/108387
- US-A1- 2012 226 439
- US-A1- 2014 053 083

## Beschreibung

Die vorliegende Erfindung betrifft ein Verfahren zur Navigation an einen Zielort, bei dem in Abhängigkeit von der aktuellen Position und dem Zielort Zielführungshinweise auf einem Display in einer kartenlosen Darstellung ausgegeben werden. Sie betrifft ferner eine Vorrichtung, insbesondere in einem Fahrzeug, zur Navigation an einen Zielort mit einem Display, einer Positionsbestimmungseinrichtung und einer Steuerung. Dabei ist die Steuerung eingerichtet, in Abhängigkeit von der aktuellen Position und dem Zielort Zielführungshinweise auf dem Display in einer kartenlosen Darstellung auszugeben. Die zunehmende Verbreitung von Navigationssystemen, etwa in Mobiltelefonen und ähnlichen mobilen Nutzergeräten, sowie in Fahrzeugen, geht einher mit steigenden Ansprüchen an den Funktionsumfang, den Bedienkomfort und die Qualität der bereitgestellten Dienste. Navigationssysteme dienen dabei in erster Linie dazu, ausgehend von einer aktuellen oder definierten Position eine Route zu einem definierten Ziel zu bestimmen. Diese Routenbestimmung basiert insbesondere auf Daten zu einem verfügbaren Wegenetz, etwa auf einer digitalen Karte eines Systems von Straßen, die durch ein Fahrzeug befahrbar sind. Dem Nutzer kann dabei eine Vielzahl von Informationen ausgegeben werden, etwa zu geographischen Gegebenheiten oder Infrastruktureinrichtungen, und eine Integration weiterer Dienste, etwa eines elektronischen Terminkalenders, kann den Funktionsumfang erweitern.

Bei einer umfassenden Routenplanung, insbesondere für ein Fahrzeug, ist zudem zu berücksichtigen, dass die Fahrt oft nicht direkt auf einer Straße des Wegenetzes beginnt und nicht direkt bei einem Zielpunkt des Wegenetzes endet. Insbesondere wird in vielen Situationen eine Parkgelegenheit genutzt und ein Stück des Weges bis zum eigentlichen Ziel nicht mit dem Fahrzeug zurückgelegt.

Bei dem in der DE 10 2012 207 412 A1 beschriebenen System zur selbsttätigen Wegweisung sind innerhalb eines Gebäudes Aktoren angeordnet, etwa Farbleuchten. Um einem Besucher den Weg zu einem Ziel zu weisen, werden die auf dem Weg befindlichen Aktoren in einen bestimmten Zustand gebracht, beispielsweise Leuchten in einer bestimmten Farbe. Der Besucher kann nun den Aktoren folgen und erreicht das Ziel.

Das in der DE 10 2011 089 416 A1 beschriebene Verfahren zur Routenplanung wird mittels eines entfernten Datenverarbeitungssystems durchgeführt. Dabei können Kalendereinträge berücksichtigt werden, etwa Ort und Zeitpunkt eines Termins.

Die EP 1 422 501 A1 offenbart die Darstellung von Zielführungshinweisen auf einem Display in einer 2-dimensionalen Kartendarstellung in Verbindung mit der Darstellung eines elektronischen Kalenders, wobei Zielführungshinweise ausgegeben werden, die auf Daten des elektronischen Kalenders beruhen.

Die Die US 2014/0053083 A1 offenbart die Darstellung einer 3-dimensionalen Karte in der Umgebung eines Zielpunkts einer Verabredung.

Die EP 2 772 726 A1 offenbart die Darstellung einer 2-dimensionalen Karte, welche in einer Umgebung eines Zielorts in eine 3-dimensionalen Karte übergeht.

Die US 2012/0226439 A1 offenbart ebenfalls den Übergang von einer 2-dimensionalen Kartendarstellung zu einer 3-dimensionalen Kartendarstellung, beispielsweise in Abhängigkeit von der Entfernung zu einem Zielort.

Es ist die Aufgabe der vorliegenden Erfindung, ein Verfahren und eine Vorrichtung zur Navigation an einen Zielort bereitzustellen, mit deren Hilfe einem Nutzer Zielführungshinweise besonders einfach und leicht erfassbar dargestellt werden können.

Diese Aufgabe wird durch ein Verfahren mit den Merkmalen des Anspruchs 1 und eine Vorrichtung mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren der oben genannten Art werden letzte Zielführungshinweise vor dem Zielort automatisch in einer 3-dimensionalen Kartendarstellung ausgegeben.

Dadurch wird vorteilhafterweise eine besonders gute Übersicht über die Umgebung des Zielorts erreicht und der Nutzer kann sein Ziel leicht finden, selbst wenn er etwa sein Fahrzeug mit dem Navigationssystem an einem Parkplatz zurücklässt.

Bei dem Verfahren werden insbesondere die aktuelle Position und der Zielort erfasst, etwa durch an sich bekannte Verfahren der geographischen Positionsbestimmung beziehungsweise eine Nutzereingabe, wie sie in Navigationssystemen üblich ist. In Abhängigkeit von der aktuellen Position und dem Zielort kann nun eine Route erzeugt werden und die Zielführungshinweise werden anhand dieser Route erzeugt. Das System ermittelt also einen Weg zum Zielort und erzeugt eine Ausgabe, durch die der Nutzer entlang dieses Weges geführt wird. Dabei können ferner Zielführungshinweise akustisch wahrnehmbar ausgegeben werden.

Gemäß der Erfindung werden die letzten Zielführungshinweise in besonderer Weise ausgegeben, wobei der Detailgehalt der Hinweise erhöht wird. Die "letzten Zielführungshinweise" im Sinne der Erfindung können dabei auf verschiedene Weisen definiert sein: Beispielsweise können sie alle Zielführungshinweise ab dem Zeitpunkt umfassen, zu dem sich die aktuelle Position in einer bestimmten Entfernung des Zielorts befindet. Ferner kann eine bestimmte Anzahl letzter Zielführungshinweise definiert werden. Zudem kann vorgesehen sein, dass nach einer bestimmten Nutzereingabe alle folgenden Zielführungshinweise als "letzte Zielführungshinweise" behandelt werden.

Die besondere Rolle der letzten Zielführungshinweise wird dadurch deutlich gemacht, dass sie in anderer Weise als die übrigen Zielführungshinweise angezeigt werden. Erfindungsgemäß geschieht dies durch einen Wechsel von einer kartenlosen Darstellung zu einer 3-dimensionalen Kartendarstellung. Insbesondere erlaubt dies die Darstellung einer größeren Informationsdichte für die letzten Zielführungshinweise, während die vorangehenden Zielführungshinweise einen größeren Überblick leicht erfassbar darstellen können.

Eine nicht zu der beanspruchten Erfindung gehörende 2-dimensionale Kartendarstellung wird so verstanden, dass eine Draufsicht auf eine Karte, insbesondere ein Wegenetz, angezeigt wird. Dabei können topographische Gegebenheiten berücksichtigt werden und zusätzliche Informationen angezeigt werden, wie zum Beispiel Bezeichnungen mit geographischem Bezug, Verkehrsregelungen oder Verkehrsmeldungen. Diese Darstellung erfolgt in der 2-dimensionalen Kartendarstellung insbesondere durch eine Projektion in eine Ebene.

Erfindungsgemäß erfolgt eine kartenlose Darstellung, bei der Richtungsanweisungen ausgegeben werden, ohne dass sie in Beziehung zu einer Kartendarstellung, etwa mit einem kartographierten Wegenetz, stehen. Dadurch kann die Anzeigefläche zur Anzeige eines elektronischen Kalenders und gegebenenfalls weiterer verschiedener Informationen genutzt werden, etwa Daten zu einem Radio oder Mediensystem oder andere Daten.

Dagegen umfasst die 3-dimensionale Kartendarstellung eine graphische Darstellung dreidimensionaler Objekte, etwa von Gebäuden, topographischen Besonderheiten des Geländes oder dreidimensional dargestellten Symbolen. Die Objekte können dabei zum Beispiel perspektivisch auf der 2-dimensionalen Anzeigefläche dargestellt werden. Ferner kann die 3-dimensionale Kartendarstellung eine Darstellung eines Wegenetzes umfassen. Insbesondere können 2- und 3-dimensionale Kartendarstellung miteinander so in Beziehung stehen, dass die 2-dimensionale Darstellung im Wesentlichen auf einer Projektion der 3-dimensionalen Darstellung in eine Ebene beruht.

Gemäß der Erfindung werden weitere Zielführungshinweise in der 3-dimensionalen Kartendarstellung ausgegeben, wenn der Zielort in der 3-dimensionalen Kartendarstellung angezeigt wird. Dadurch können dem Nutzer vorteilhafterweise zusätzliche Informationen, insbesondere Detailinformationen zur Umgebung des Zielorts und zum Zielort selbst ausgegeben werden. Die "weiteren Zielführungshinweise" sind solche Informationen, die über die herkömmliche Routenführung hinausgehen.

Zum Beispiel werden hier Informationen ausgegeben, die nicht die Fahrt eines Fahrzeugs zum Zielort betreffen, sondern den Fußweg von einem Parkplatz zum Zielgebäude oder einen Weg innerhalb des Gebäudes zu einem Besprechungsraum. Die Ausgabe der weiteren Zielführungshinweise kann zusätzlich akustisch erfolgen.

In einer Weiterbildung betreffen die weiteren Zielführungshinweise ein oder mehrere Merkmale aus folgender Liste: Gebäude, Stockwerk, Fahrstuhl, Raum, Treppe, Flur, Eingang. Der Nutzer erhält dadurch in vorteilhafter Weise genaue Angaben darüber, wie er den Zielort erreicht, wenn sich dieser in einem Gebäude befindet. Insbesondere kann er sich bereits vor der Ankunft am Zielort schon darüber orientieren, welchen Weg er nehmen muss.

Erfindungsgemäß beruhen die weiteren Zielführungshinweise auf Daten eines elektronischen Kalenders. Die Navigation kann dadurch vorteilhafterweise auf die Daten des Kalenders ausgerichtet werden, wobei der Zweck der Reise, etwa die Anreise zu einem Termin oder Informationen zu einer Raumnummer, berücksichtigt werden kann.

Bei einer Weiterbildung umfassen die Daten des elektronischen Kalenders zumindest einen Termin. Es wird zumindest ein graphisches Objekt erzeugt und ausgegeben, welches den Termin betrifft. So können dem Nutzer in vorteilhafter Weise Informationen zu einem Termin ausgegeben werden, insbesondere über den Termin, zu dem der Nutzer gerade auf dem Weg ist. Dies kann die Navigation weiter dadurch unterstützen, dass dem Nutzer alle relevanten Informationen angezeigt werden.

Bei einer Ausbildung des erfindungsgemäßen Verfahrens werden die Daten des elektronischen Kalenders von einem mobilen Nutzergerät und/oder von einem externen Server erfasst.

Der Nutzer kann dadurch vorteilhafterweise eine elektronische Kalenderanwendung nutzen, bei der beispielsweise über eine Netzwerkverbindung auf den Kalender zugegriffen wird, sodass mehrere Geräte gleichzeitig Termine und andere Kalenderdaten abrufen und gegebenenfalls verwalten können. Dies erlaubt ferner einen modularen Betrieb eines Navigationssystems, bei dem einzelne Komponenten einfach entfernt, hinzugefügt und ausgetauscht werden können.

Gemäß der Erfindung werden die letzten Zielführungshinweise ausgegeben, wenn sich die aktuelle Position innerhalb einer bestimmten Umgebung des Zielorts befindet. Der Nutzer erhält dadurch vorteilhafterweise die veränderte, detailliertere Darstellung, wenn er sich dem Zielort annähert.

Die Umgebung des Zielorts kann etwa anhand eines Radius um den Zielort bestimmt werden. Ferner können weitere geographische Einheiten als Umgebung definiert werden, etwa eine Straße und ihre Nachbarstraßen, ein Stadtviertel oder eine Ortschaft. Beim Eintritt in diese Umgebung wird der Wechsel der Anzeige zur 3-dimensionalen Kartendarstellung vollzogen und die weiteren Zielführungshinweise werden ausgegeben.

Bei einer weiteren Ausbildung umfasst die 3-dimensionale Kartendarstellung zumindest eine Darstellung eines Gebäudes. Dies ermöglicht vorteilhafterweise eine detaillierte Darstellung eines Ortes. Dabei kann insbesondere eine Darstellung des Gebäudes zum Beispiel perspektivisch angezeigt werden, welches das Ziel der Navigation ist, etwa durch Straßennamen und Hausnummer identifizierbar, oder in dem sich der eigentliche Zielort befindet, etwa ein bestimmter Besprechungsraum. Ferner können Eigenschaften des Gebäudes dargestellt werden, etwa die äußeren Abmessungen wie Höhe und Breite, absolut oder relativ zu den umgebenden Gebäuden, die Zahl der Stockwerke oder die Position der Eingänge. Bei einer Weiterbildung umfasst die Darstellung des Gebäudes zumindest eine graphische Hervorhebung oder Markierung. Dies erlaubt vorteilhafterweise die Ausgabe von Informationen, die dem Nutzer eine Navigation innerhalb des Gebäudes erleichtern, etwa wenn ihm angezeigt wird, in welches Stockwerk er sich bewegen muss, welchen Eingang er benutzen soll, in welche Richtung der gewünschte Raum relativ zum Eingang gelegen ist oder ob das Gebäude über einen Aufzug verfügt.

Bei einer Weiterbildung werden die letzten Zielführungshinweise von einem externen Server erfasst. Dies erlaubt vorteilhafterweise die Bereitstellung aktueller und detaillierter Daten, ohne dass ein großes Datenvolumen von dem Navigationsgerät intern gespeichert werden muss. Beispielsweise kann, wenn sich der Nutzer auf dem Weg zu einem Zielort befindet, der durch Termindaten in einem elektronischen Kalender vorgegeben ist, eine genauere Beschreibung des Gebäudes am Zielort und seiner Umgebung erfasst werden. Dies kann die Darstellung einer Ansicht des Gebäudes erlauben, aus welcher der Nutzer leicht alle für ihn relevanten Details erkennen und sie mit der wirklichen Ansicht des Gebäudes abgleichen kann. Zudem können etwa Detailinformationen zu der Umgebung des Zielorts bei Bedarf erfasst werden, beispielsweise können Informationen über Wege innerhalb eines Tagungszentrums von einem externen Server bereitgestellt und erfasst werden, sodass jeweils zum Zeitpunkt der Ausgabe möglichst aktuelle Informationen zur Verfügung stehen.

Die erfindungsgemäße Vorrichtung der oben genannten Art umfasst ein Display, eine Positionsbestimmungseinrichtung und eine Steuerung. Die Steuerung ist eingerichtet, in Abhängigkeit von der aktuellen Position und dem Zielort Zielführungshinweise auf dem Display in einer kartenlosen Darstellung auszugeben. Die Vorrichtung ist gemäß der Erfindung dadurch gekennzeichnet, dass die Steuerung eingerichtet ist, die letzten Zielführungshinweise vor dem Zielort automatisch in einer 3-dimensionalen Kartendarstellung auszugeben.

Die erfindungsgemäße Vorrichtung ist insbesondere ausgebildet, das vorstehend beschriebene erfindungsgemäße Verfahren zu implementieren. Sie weist somit dieselben Vorteile auf wie das erfindungsgemäße Verfahren. Die erfindungsgemäße Vorrichtung ist insbesondere in einem Fahrzeug angeordnet.

Bei einer Weiterbildung der erfindungsgemäßen Vorrichtung ist die Steuerung eingerichtet, weitere Zielführungshinweise in der 3-dimensionalen Kartendarstellung auszugeben, wenn der Zielort in der 3-dimensionalen Kartendarstellung angezeigt wird. Die übrigen Zielführungshinweise können somit sinnvoll ergänzt werden und dem Nutzer kann eine besonders gute Navigation zur Verfügung gestellt werden.

Bei einer weiteren Ausbildung betreffen die weiteren Zielführungshinweise ein oder mehrere Merkmale aus folgender Liste: Gebäude, Stockwerk, Fahrstuhl, Raum, Treppe, Flur, Eingang. Sie ergänzen damit die übrigen Zielführungshinweise in besonders geeigneter Form um Detail über Gebäude und Bauwerke, bei oder in denen der Nutzer auf dem Weg zum Zielort navigieren muss.

Erfindungsgemäß beruhen die weiteren Zielführungshinweise auf Daten eines elektronischen Kalenders. Die Navigation kann dadurch vorteilhafterweise an den Zweck des Aufenthalts an einem bestimmten Ort, etwa eine Besprechung in einem bestimmten Raum, angepasst werden. Bei einer Weiterbildung ist zumindest zeitweise eine Verbindung herstellbar zu einem mobilen Nutzergerät und/oder zu einem externen Server, wobei die Daten des elektronischen Kalenders von dem mobilen Nutzergerät oder von dem externen Server erfassbar sind. Es können damit in vorteilhafter Weise Daten von externen Systemen erfasst und bei der Navigation berücksichtigt werden.

Die Erfindung wird nun anhand von Ausführungsbeispielen mit Bezug zu den Zeichnungen erläutert.
- Figur 1: zeigt ein Ausführungsbeispiel der erfindungsgemäßen Vorrichtung in einem Fahrzeug,
- Figuren 2A und 2B: zeigen Beispiele 2-dimensionaler Darstellungen,
- Figuren 3A und 3B: zeigen Beispiele erfindungsgemäß erzeugter 3-dimensionaler Darstellungen und
- Figuren 4A bis 4D: zeigen ein Ausführungsbeispiel des Übergangs zwischen erfindungsgemäß erzeugten Darstellungen.

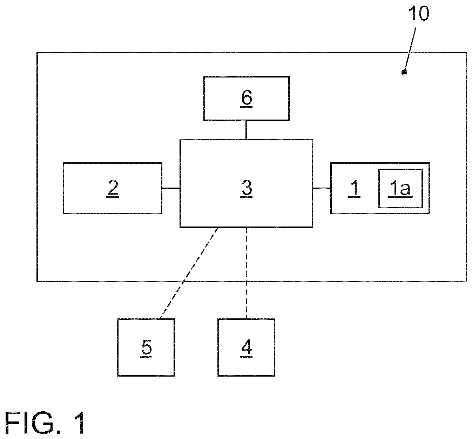

Mit Bezug zu Figur 1 wird ein Ausführungsbeispiel der erfindungsgemäßen Vorrichtung in einem Fahrzeug 10 erläutert.

Das Fahrzeug 10 umfasst eine Steuerung 3, mit der ein Display 1, welches eine Anzeigefläche 1a umfasst, eine Positionsbestimmungseinrichtung 2 und eine Eingabeeinrichtung 6 gekoppelt sind.

Ferner ist die Steuerung 3 datentechnisch mit einem externen Server 4 und einem mobilen Nutzergerät 6 verbunden. Diese Verbindung besteht wenigstens zeitweise und kann über eine Verbindung durch Kabel oder Funk, beispielsweise WLAN, Bluetooth oder ein Mobilfunknetz, erfolgen. Ferner kann die datentechnische Verbindung über ein Netzwerk, etwa das Internet, hergestellt werden

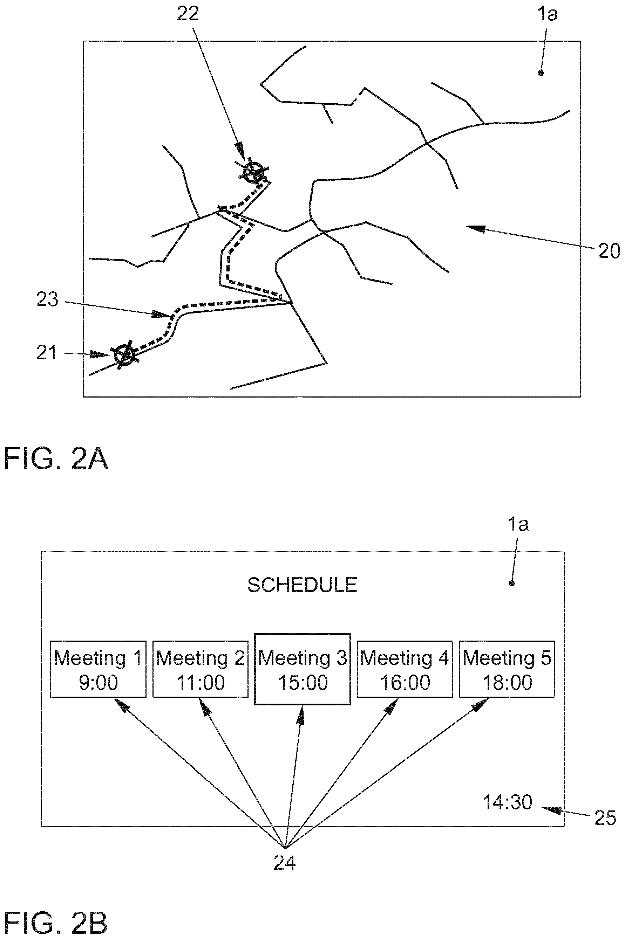

Mit Bezug zu den Figuren 2A und 2B werden Beispiele 2-dimensionaler Darstellungen erläutert, wobei nur die kartenlose Darstellung gemäß Figur 2B Teil der Erfindung ist.

Anhand der von der Positionsbestimmungseinrichtung 2 erfassten aktuellen Position und der mittels der Eingabeeinrichtung 6 vom Nutzer eingegebenen Bezeichnung des Zielorts wird in einem nicht zur Erfindung gehörenden Beispiel die in Figur 2A dargestellte 2-dimensionale Kartendarstellung erzeugt und auf der Anzeigefläche 1a angezeigt. Dabei umfasst die Darstellung ein Wegenetz 20, in dem die aktuelle Position 21 und der Zielort 22 eingezeichnet sind. Ferner erzeugt die Steuerung 3 eine Route 23, die ebenfalls dargestellt wird.

Im dargestellten Fall dient die Überlagerung des Wegenetzes 20 und der Route 23 als Zielführungshinweis für den Nutzer, der anhand dieser Darstellung den Weg zum Zielort 22 finden kann. Ferner können zusätzliche Hinweise, etwa in Form von Pfeildarstellungen, die den Nutzer zum Abbiegen auffordern, angezeigt werden oder es können akustische Hinweise ausgegeben werden. Der Kartenausschnitt und/oder der Maßstab der Kartendarstellung kann auf an sich bekannte Weise vergrößert oder verkleinert werden, um die Darstellung an die Größe der Anzeigefläche 1a des Displays 1 und an die Bedürfnisse des Nutzers anzupassen.

Dagegen zeigt Figur 2B eine kartenlose Darstellung, in diesem Fall mit der Darstellung von Daten eines Kalenders: Terminobjekte 24 stellen einzelne Termine von links nach rechts chronologisch geordnet dar, wobei der nächste relevante Termin mittig angezeigt und durch ein vergrößertes Terminobjekt 24 dargestellt ist. Die Anzeige umfasst hier ferner eine Darstellung der Uhrzeit 25. In weiteren Ausführungsbeispielen werden Daten anderer Einrichtungen des Fahrzeugs 10 angezeigt, etwa Menüs zum Einstellen eines Radios oder einer Klimaanlage.

Die Erfassung der Daten des Kalenders erfolgt im vorliegenden Beispiel anhand der Verbindung zum mobilen Nutzergerät 5, das etwa ein Mobiltelefon des Nutzers ist. Auf diesem ist der Kalender des Nutzers gespeichert und die Daten werden über eine drahtlose Verbindung an die Steuerung 3 übertragen. Ferner werden Kalenderdaten von dem externen Server 4 erfasst, der eine zentrale Speicherung und Verwaltung von Terminen erlaubt, sodass verschiedene Geräte auf die gleichen Daten zugreifen können.

In einem weiteren Ausführungsbeispiel füllt die Anzeigefläche 1a nicht die maximale Fläche, sondern repräsentiert lediglich einen Teil der Fläche, die bei dem Display 1 zur Verfügung steht. Insbesondere kann die Darstellung auf an sich bekannte Weise in einem Fenster oder in einem nicht streng abgegrenzten Bereich der Anzeigefläche 1a erfolgen.

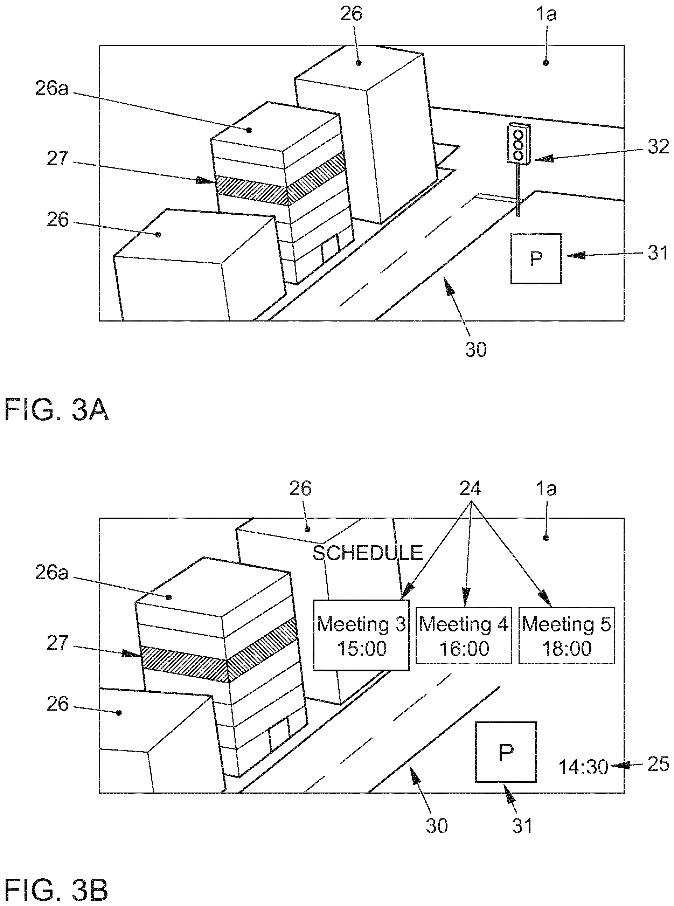

Mit Bezug zu den Figuren 3A und 3B werden Beispiele 3-dimensionaler Darstellungen erläutert, die durch ein Ausführungsbeispiel des erfindungsgemäßen Verfahrens erzeugt wurden. Dabei wird das Verfahren mittels des in Figur 1 dargestellten und oben erläuterten Ausführungsbeispiels einer erfindungsgemäßen Vorrichtung ausgeführt.

Im Vergleich zu den in den Figuren 2A und 2B dargestellten Fällen ist hierbei die Navigation zum Zielort bereits so weit zurückgelegt, dass nun letzte Zielführungshinweise ausgegeben werden. Dafür wird zu einer 3-dimensionalen Kartendarstellung gewechselt, die in diesem Fall eine perspektivische Darstellung von Objekten ist.

Insbesondere wird im dargestellten Fall erkannt, dass die letzten Zielführungshinweise ausgegeben werden sollen, weil das Fahrzeug 10 die Straße erreicht hat, in der sich der Zielort befindet. In weiteren Ausführungsbeispielen wird zu der 3-dimensionalen Kartendarstellung gewechselt, wenn die aktuelle Position des Fahrzeugs 10 einen bestimmten Luftlinienabstand zum Zielort unterschreitet oder wenn eine entsprechende Eingabe des Nutzers durch die Eingabeeinrichtung 6 erfasst wird.

In dieser Phase der Navigation werden zusätzlichen zu den letzten Zielführungshinweisen, die etwa die zum Zielort zu fahrende Route betreffen, noch weitere Zielführungshinweise ausgegeben, die etwa den Weg zu einem Raum in einem Gebäude am Zielort betreffen. Diese Hinweise werden im vorliegenden Fall anhand von Daten des externen Servers 4 erzeugt, wobei der externe Server 4 insbesondere eine Datenbank umfasst, von der bei Bedarf detaillierte Angaben zu einzelnen Gebäuden oder Gebäudekomplexen abgerufen werden können.

Bei der in Figur 3A gezeigten Darstellung füllt die 3-dimensionale Kartendarstellung die Anzeigefläche 1a, während sie in Figur 3B in die oben mit Bezug zu Figur 2B erläuterte Darstellung einer Kalenderfunktion integriert ist. Es werden daher im rechten Bereich der Anzeigefläche 1a die Terminobjekte 24 angezeigt, während im linken Bereich die 3-dimensionale Kartendarstellung angezeigt wird.

Zunächst wird der in Figur 3A dargestellte Fall erläutert. Hier umfasst die 3-dimensionale Darstellung die Umgebung des Zielorts, der sich im dargestellten Fall in einer bestimmten Zieletage 27 des Zielgebäudes 26a befindet. Dargestellt sind ferner umgebende Gebäude 26, die vor den Gebäuden 26 und 26a verlaufende Straße 30, ein Parkplatz 31 und eine Ampel 32. Dabei wird insbesondere die Anordnung und Größe der dargestellten Objekte, etwa die jeweilige Höhe der dargestellten Gebäude 26 und 26a, so erzeugt, dass der Nutzer die Darstellung möglichst einfach mit der Wirklichkeit abgleichen kann.

Ferner ist bei dem Zielgebäude 26a die Zieletage 27 markiert. Die Markierung kann insbesondere durch eine von der Umgebung abweichende farbliche Gestaltung, eine besondere Helligkeit, eine Schraffur, Blinken und/oder weitere graphisch darstellbare Hervorhebungen erfolgen. Der Nutzer kann der Darstellung somit entnehmen, wo sich der Zielort befindet.

Analog zu Figur 3A stellt auch Figur 3B die Umgebung des Zielorts 3-dimensional perspektivisch dar, wobei hier allerdings gleichzeitig Informationen einer anderen Einrichtung des Fahrzeugs, in diesem Beispiel eine Kalenderfunktion, dargestellt werden. Die Anzeigefläche 1a ist daher nicht vollständig mit der 3-dimensionalen Kartendarstellung ausgefüllt, sondern im rechten Bereich werden Terminobjekte 24 angezeigt, insbesondere solche Terminobjekte 24, die für den Zielort relevant sind.

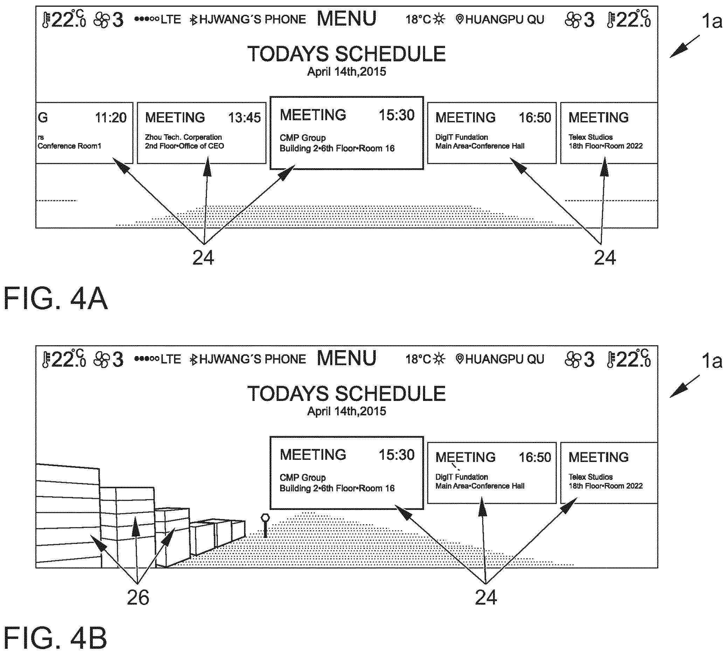

Mit Bezug zu den Figuren 4A bis 4D wird ein Ausführungsbeispiel des Übergangs zwischen Darstellungen erläutert, die durch ein Ausführungsbeispiel des erfindungsgemäßen Verfahrens erzeugt wurden. Dabei wird das Verfahren mittels des in Figur 1 dargestellten und oben erläuterten Ausführungsbeispiels einer erfindungsgemäßen Vorrichtung ausgeführt.

Figur 4A zeigt eine analog zu Figur 2B erzeugte kartenlose Darstellung, bei der die Informationen eines Kalenders des Nutzers angezeigt werden. Die Darstellung umfasst Terminobjekte 24, die chronologisch horizontal angeordnet sind. Das derzeit aktuelle Terminobjekt 24 ist mittig und vergrößert dargestellt. Auf der Anzeigefläche 1a sind ferner weitere Informationen dargestellt, hier am oberen Rand der Anzeigefläche 1a.

Unterschreitet nun die von der Positionsbestimmungseinrichtung 2 erfasste aktuelle Position einen bestimmten Abstand zum Zielort, so wird eine 3-dimensionale Kartendarstellung angezeigt. Der Wechsel zu dieser Form der Anzeige beginnt, wie in Figur 4B dargestellt, mit dem Verschwinden der nicht mehr relevanten, da auf die Vergangenheit bezogenen Terminobjekte 24, während gleichzeitig im linken Bereich der Anzeigefläche 1a 3-dimensionale Darstellungen von Gebäuden 26 aufgebaut werden. Dabei kann insbesondere eine Animation dargestellt werden, bei der die Gebäude 26 aus dem Boden zu wachsen scheinen.

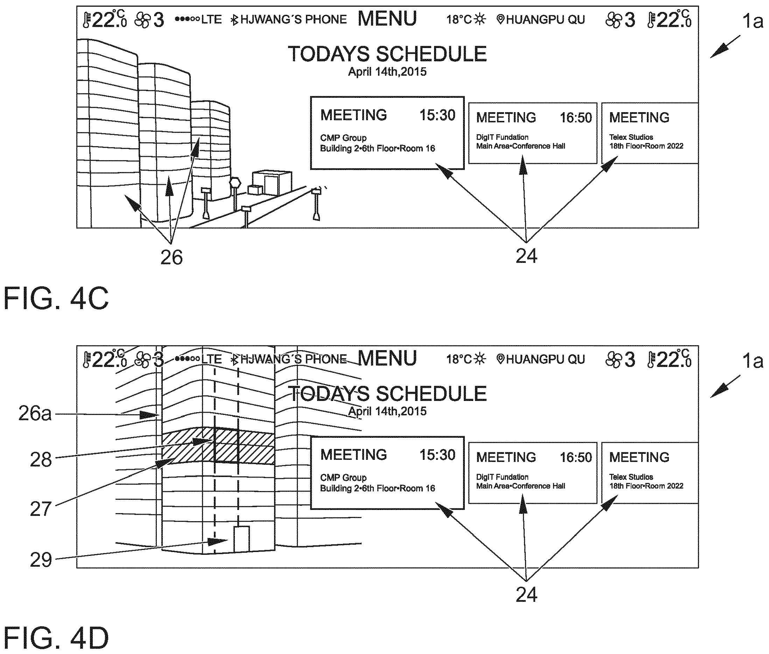

Figur 4C zeigt die vollständig aufgebaute 3-dimensionale Darstellung der Umgebung des Zielorts. Diese wird insbesondere so erzeugt, dass sie in etwa der Sicht des Fahrers auf seine reale Umgebung entspricht. Weiterhin werden die Terminobjekte 24 angezeigt, wobei deren Darstellung so verändert werden kann, dass ihr Platzbedarf an den Platzbedarf für die 3-dimensionale Kartendarstellung angepasst wird.

Nähert sich der Nutzer weiter an den Zielort an oder stellt er beispielsweise das Fahrzeug 10 auf einem Parkplatz ab, so werden weitere Zielführungshinweise ausgegeben, die eine bessere Navigation zum präzisen Zielort erlauben. Dieser präzise Zielort wird in dem in Figur 4D dargestellten Beispiel anhand der Daten des Termins ermittelt, zu dem der Nutzer auf dem Weg ist. Dieser umfasst Informationen darüber, in welchem Stockwerk sich der Besprechungsraum befindet. Von dem externen Server 3 werden Daten über den Zielort und seine Umgebung erfasst und es wird in einer Detailansicht des Zielgebäudes 26a am Ziel angezeigt, die Informationen darüber umfasst, wo sich der Eingang 29 befindet, ob ein Fahrstuhl 28 vorhanden ist und in welcher Zieletage 27 sich der Besprechungsraum befindet. Zur besseren Erkennbarkeit dieser Details wird das Zielgebäude 26a am Zielort aus einer kurz davor befindlichen Perspektive dargestellt.

### Bezugszeichenliste

- 1: Display
- 1a: Anzeigefläche
- 2: Positionsbestimmungseinrichtung
- 3: Steuerung
- 4: Externer Server
- 5: Mobiles Nutzergerät
- 6: Eingabeeinrichtung
- 10: Fahrzeug
- 20: Wegenetz
- 21: Aktuelle Position (graphische Repräsentation)
- 22: Zielort (graphische Repräsentation)
- 23: Route (graphische Repräsentation)
- 24: Terminobjekt
- 25: Uhrzeit
- 26: Gebäude (graphische Repräsentation)
- 26a: Zielgebäude
- 27: Zieletage (graphische Repräsentation)
- 28: Fahrstuhl (graphische Repräsentation)
- 29: Gebäudeeingang (graphische Repräsentation)
- 30: Straße (graphische Repräsentation)
- 31: Parkplatz (graphische Repräsentation)
- 32: Ampel (graphische Repräsentation)

## Patentansprüche

1. Verfahren zur Navigation an einen Zielort, bei dem
in Abhängigkeit von der aktuellen Position und dem Zielort Zielführungshinweise auf einem Display (1) in einer kartenlosen Darstellung mit der Darstellung eines elektronischen Kalenders ausgegeben werden, bei der Richtungsanweisungen ausgegeben werden, ohne dass sie in Beziehung zu einer Kartendarstellung stehen,
wobei, wenn sich die aktuelle Position innerhalb einer bestimmten Umgebung des Zielorts befindet, letzte Zielführungshinweise vor dem Zielort automatisch in einer 3-dimensionalen Kartendarstellung ausgegeben werden, wobei beim Eintritt in die Umgebung ein Wechsel zur 3-dimensionalen Kartendarstellung vollzogen wird, wobei die letzten Zielführungshinweise einen höheren Detailgehalt aufweisen als die Zielführungshinweise, und
weitere Zielführungshinweise in der 3-dimensionalen Kartendarstellung ausgegeben werden, wenn der Zielort in der 3-dimensionalen Kartendarstellung angezeigt wird, wobei die weiteren Zielführungshinweise auf Daten des elektronischen Kalenders beruhen.

2. Verfahren nach Anspruch 1,
**dadurch gekennzeichnet, dass**
die weiteren Zielführungshinweise ein oder mehrere Merkmale aus folgender Liste betreffen: Gebäude (26, 26a), Stockwerk (27), Fahrstuhl (28), Raum, Treppe, Flur, Eingang (29).

3. Verfahren nach Anspruch 1,
**dadurch gekennzeichnet, dass**
die Daten des elektronischen Kalenders zumindest einen Termin umfassen und dass zumindest ein graphisches Objekt (24) erzeugt und ausgegeben wird, welches den Termin betrifft.

4. Verfahren nach Anspruch 1 oder 3,
**dadurch gekennzeichnet, dass**
die Daten des elektronischen Kalenders von einem mobilen Nutzergerät (5) und/oder von einem externen Server (4) erfasst werden.

5. Verfahren nach einem der vorhergehenden Ansprüche,
**dadurch gekennzeichnet, dass**
die 3-dimensionale Kartendarstellung zumindest eine Darstellung eines Gebäudes (26, 26a) umfasst.

6. Verfahren nach Anspruch 5,
**dadurch gekennzeichnet, dass**
die Darstellung des Gebäudes (26, 26a) zumindest eine graphische Hervorhebung oder Markierung umfasst.

7. Verfahren nach einem der vorhergehenden Ansprüche,
**dadurch gekennzeichnet, dass**
die letzten Zielführungshinweise von einem externen Server (4) erfasst werden.

8. Vorrichtung zur Navigation an einen Zielort mit
einem Display (1),
einer Positionsbestimmungseinrichtung (2) und
einer Steuerung (3), die eingerichtet ist, in Abhängigkeit von der aktuellen Position und dem Zielort Zielführungshinweise auf dem Display (1) auszugeben,
**dadurch gekennzeichnet, dass**
die Steuerung (3) eingerichtet ist,
die Zielführungshinweise in einer kartenlosen Darstellung mit der Darstellung eines elektronischen Kalenders auszugeben, bei der Richtungsanweisungen ausgegeben werden, ohne dass sie in Beziehung zu einer Kartendarstellung stehen,
letzte Zielführungshinweise vor dem Zielort automatisch in einer 3-dimensionalen Kartendarstellung auszugeben, wenn sich die aktuelle Position innerhalb einer bestimmten Umgebung des Zielorts befindet, wobei beim Eintritt in die Umgebung ein Wechsel zur 3-dimensionalen Kartendarstellung vollzogen wird, wobei die letzten Zielführungshinweise einen höheren Detailgehalt aufweisen als die Zielführungshinweise, und
weitere Zielführungshinweise in der 3-dimensionalen Kartendarstellung auszugeben, wenn der Zielort in der 3-dimensionalen Kartendarstellung angezeigt wird, wobei die weiteren Zielführungshinweise auf Daten des elektronischen Kalenders beruhen.

9. Vorrichtung nach Anspruch 8,
**dadurch gekennzeichnet, dass**
die weiteren Zielführungshinweise ein oder mehrere Merkmale aus folgender Liste betreffen: Gebäude (26, 26a), Stockwerk (27), Fahrstuhl (28), Raum, Treppe, Flur, Eingang (29).

10. Vorrichtung nach Anspruch 9,
**dadurch gekennzeichnet, dass**
zumindest zeitweise eine Verbindung herstellbar ist zu einem mobilen Nutzergerät (5) und/oder zu einem externen Server (24) und dass die Daten des elektronischen Kalenders von dem mobilen Nutzergerät (5) oder von dem externen Server (4) erfassbar sind.

## Claims

1. A method for the navigation to a destination, in which,
depending on the current position and the destination, destination guidance information is output on a display (1) in a mapless representation with the representation of an electronic calendar, in which direction instructions are output, without being related to a map representation,
wherein,
if the current position is located within a specific environment of the destination, final destination guidance information before the destination is automatically output in a 3-dimensional map representation, wherein upon entry into the environment a change to the 3-dimensional map representation is performed, wherein the final destination guidance information has a higher detail content than the destination guidance information, and
further destination guidance information is output in the 3-dimensional map representation, when the destination is displayed in the 3-dimensional map representation, wherein the further destination guidance information is based on data of the electronic calendar.

2. The method according to Claim 1,
**characterized in that**
the further destination guidance information relates to one or several features from the following list: Building (26, 26a), floor (27), elevator (28), room, staircase, hall, entrance (29).

3. The method according to Claim 1,
**characterized in that**
the data of the electronic calendar comprise at least one meeting and that at least one graphic object (24) is generated and output, which relates to the meeting.

4. The method according to Claim 1 or 3,
**characterized in that**
the data of the electronic calendar is captured by a mobile user device (5) and/or by an external server (4).

5. The method according to any one of the preceding claims,
**characterized in that**
the 3-dimensional map representation comprises at least one representation of a building (26, 26a).

6. The method according to Claim 5,
**characterized in that**
the representation of the building (26, 26a) comprises at least one graphic highlighting or marking.

7. The method according to any one of the preceding claims,
**characterized in that**
the final destination guidance information is captured by an external server (4).

8. A device for the navigation to a destination having
a display (1),
a position determination means (2) and
a control (3), which is configured, to output destination guidance information on the display (1) depending on the current position and the destination,
**characterized in that**
the control (3) is configured,
to output the destination guidance information in a mapless representation with the representation of an electronic calendar, in which direction instructions are output, without being related to a map representation,
to output final destination guidance information before the destination automatically in a 3-dimensional map representation, when the current position is located within a specific environment of the destination, wherein upon entry into the environment a change to the 3-dimensional map representation is performed, wherein the final destination guidance information has a higher detail content than the destination guidance information, and
to output further destination guidance information in the 3-dimensional map representation, when the destination is displayed in the 3-dimensional map representation, wherein the further destination guidance information is based on data of the electronic calendar.

9. The device according to Claim 8,
**characterized in that**
the further destination guidance information relates to one or several features from the following list: Building (26, 26a), floor (27), elevator (28), room, staircase, hall, entrance (29).

10. The device according to Claim 9,
**characterized in that**
at least temporarily a connection can be established to a mobile user device (5) and/or to an external server (24) and that the data of the electronic calendar can be captured by the mobile user device (5) or by the external server (4).

## Revendications

1. Procédé de navigation vers une destination, dans lequel
en fonction de la position actuelle et de la destination, des indications de guidage sont affichées sur un écran (1) dans une représentation sans carte avec la représentation d'un calendrier électronique, dans laquelle des instructions de direction sont affichées sans qu'elles ne soient en rapport avec une représentation par carte,
moyennant quoi,
lorsque la position actuelle se trouve à l'intérieur d'un environnement déterminé de la destination, des dernières indications de guidage sont affichées avant la destination automatiquement dans une représentation de carte tridimensionnelle, moyennant quoi, lors de l'entrée dans l'environnement, un changement vers la représentation de carte tridimensionnelle est effectué, les dernières indications de guidage présentant un niveau de détail plus élevé que les indications de guidage et
d'autres indications de guidage sont affichées sur la représentation de carte tridimensionnelle lorsque la destination est affichée sur la représentation de carte tridimensionnelle, les autres indications de guidage reposant sur des données du calendrier électronique.

2. Procédé selon la revendication 1,
**caractérisé en ce que**
les autres indications de guidage concernent une ou plusieurs caractéristiques dans la liste suivante : bâtiment (26, 26a), étage (27), ascenseur (28), salle, escalier, couloir, entrée (29).

3. Procédé selon la revendication 1,
**caractérisé en ce que**
les données du calendrier électronique comprennent au moins un rendez-vous et **en ce qu'**au moins un objet graphique (24) est généré et affiché, qui concerne le rendez-vous.

4. Procédé selon la revendication 1 ou 3,
**caractérisé en ce que**
les données du calendrier électronique sont relevées par un appareil utilisateur mobile (5) et/ou par un serveur externe (4).

5. Procédé selon l'une des revendications précédentes,
**caractérisé en ce que**
la représentation de carte tridimensionnelle comprend au moins une représentation d'un bâtiment (26, 26a).

6. Procédé selon la revendication 5,
**caractérisé en ce que**
la représentation du bâtiment (26, 26a) comprend au moins une mise en valeur graphique ou un marquage.

7. Procédé selon l'une des revendications précédentes,
**caractérisé en ce que**
les dernières indications de guidage sont relevées par un serveur externe (4).

8. Dispositif de navigation vers une destination avec
un écran (1),
un dispositif de détermination de position (2) et
une commande (3), qui est conçue pour afficher des indications de guidage à l'écran (1) en fonction de la position actuelle et de la destination,
**caractérisé en ce que**
la commande (3) est conçue
pour afficher les indications de guidage dans une représentation sans carte avec la représentation d'un calendrier électronique, dans laquelle des instructions de direction sont affichées, sans qu'elles ne soient liées à une représentation de carte,
pour afficher des dernières indications de direction avant la destination automatiquement dans une représentation de carte tridimensionnelle lorsque la position actuelle se trouve à l'intérieur d'un environnement déterminé de la destination, moyennant quoi, lors de l'entrée dans l'environnement, un changement vers la représentation de carte tridimensionnelle est effectué, les dernières indications de guidage présentant un niveau de détail plus élevé que les indications de guidage et
pour afficher d'autres indications de guidage dans la représentation de carte tridimensionnelle lorsque la destination est affichée dans la représentation de carte tridimensionnelle, les dernières indications de guidage reposant sur des données du calendrier électronique.

9. Dispositif selon la revendication 8,
**caractérisé en ce que**
les autres indications de guidage concernent une ou plusieurs caractéristiques dans la liste suivante : bâtiment (26, 26a), étage (27), ascenseur (28), salle, escalier, couloir, entrée (29).

10. Dispositif selon la revendication 9,
**caractérisé en ce que**
au moins temporairement une liaison peut être établie avec un appareil utilisateur mobile (5) et/ou avec un serveur externe (24) et **en ce que** les données du calendrier électronique peuvent être relevées par l'appareil utilisateur mobile (5) ou par le serveur externe (4).
